# EUROPEAN PATENT APPLICATION

(11) **EP 1 079 615 A2**
(43) Date of publication of application: **28.02.2001**
(21) Application number: 00307289.9
(22) Date of filing: 24.08.2000
(51) Int. Cl.: H04N 5/44

(54) **System for identifying and adapting a TV-user profile by means of speech technology**

(30) Priority: 26.08.1999 US 383797; 26.08.1999 US 383760
(71) Applicant: MATSUSHITA ELECTRIC INDUSTRIAL CO., LTD., Kadoma-shi, Osaka-fu 571-8501 (JP)
(72) Inventor: Junqua, Jean-Claude, Santa Barbara, California 93110 (US); Kuhn, Roland, Santa Barbara, California 93110 (US); Davis, Tony, Santa Barbara, California 93101 (US); Li, Weiying, Montreal H2A 1W9 (CA); Zhao, Yi, Goleta, California 93117 (US)
(74) Representative: Franks, Robert Benjamin

(57) **Abstract**

Speech input supplied by the user is evaluated by the speaker verification/identification module, and based on the evaluation, parameters are retrieved from a user profile database. These parameters adapt the speech models of the speech recognizer and also supply the natural language parser with customized dialog grammars. The user's speech is then interpreted by the speech recognizer and natural language parser to determine the meaning of the user's spoken input in order to control the television tuner. The parser works in conjunction with a command module that mediates the dialog with the user, providing on-screen prompts or synthesized speech queries to elicit further input from the user when needed. The system integrates with an electronic program guide, so that the natural language parser is made aware of what programs are available when conducting the synthetic dialog with the user. Speech can be input through either a microphone or over the telephone. In addition, the user can interact with the system using a suitable computer attached via the Internet. Regardless of the mode of access, the unified access controller interprets the semantic content of the user's request and supplies the appropriate control signals to the television tuner and/or recorder.

## Description

### Background and Summary of the Invention

The present invention relates generally to multimedia consumer products such as interactive television and programmable media recorders. More particularly, the invention relates to a system and method for controlling interaction with the television using speech, and to a unified access system that allows these multimedia products to be controlled over the telephone or over the Internet.

Interactive television promises to provide a wealth of information content that boggles the mind. Current electronic program guide technology is ill-equipped to support the interactive modality. On-screen electronic program guides and push button remote control devices offer a far too complex and cumbersome user interface for selecting a program the user wishes to watch or record. It can take several minutes to scroll through or navigate through an on-screen program guide display; and pushbutton remote controls have expanded to include so many buttons that they are virtually useless, particularly in a darkened room.

Speech technology offers a way out of the current complexity dilemma. Speech can be a natural way to interact with a system, by narrowing the myriad of possible program selections to a more manageable number that can then be selected by further speech or through more conventional on-screen display and remote control pushbutton techniques.

While great strides have been made in speech technology, the truly natural, interactive environment for interactive television has yet to be achieved. A natural, intuitive interaction between user and consumer product such as the interactive TV, requires more than just good speech recognition. Natural interaction requires a sense of context, so that the semantics or underlying meaning of a user's spoken commands will be properly understood. Different people express themselves in different ways, thus these differences need to be taken into account for a good understanding of the user's spoken instructions.

The present invention addresses this concern through a unique system that ascertains the identity of the speaker when that speaker first addresses the system with an appropriate wakeup command. The command can be a polite word, such as "please," that is uttered when the user first wishes to use the system. A speaker verification/identification module within the system identifies the user's identity, based on his or her speech and then invokes a pre-defined or pre-stored set of user preferences. These preferences guide further interaction between the user and the system, making the system appear more natural to the user and simultaneously increasing the system's ability to understand the semantic content of the user's instructions.

The user preferences may store a diverse range of information, such as which channels the user is able to access (in this way adult channels can be blocked from children), customized dialogs that the system will use for that user, system usage log information, recording what that user has previously viewed, and a set of adapted speech models that will allow the recognizer of the system to do a better job in recognizing that user's utterances. The usage log may be used, for example, to learn the user's viewing preferences, thereby assisting the system in understanding the user's current request. The log may also be used to monitor a child's use of the television, thereby limiting the child's viewing to a pre-defined duration.

As already discussed, interactive television and associated multimedia technology, such as "replay" TV promises to change the way consumers use their home entertainment systems. Much is promised in the way of increased program content, video on demand, Internet web searching and e-mail via the television, and the like. However, interacting with this new, greatly enhanced home entertainment and information medium presents a set of challenging problems. Many are beginning to recognize that the on-screen electronic program guide and the ubiquitous pushbutton remote control device fall far short as a means to control this new medium.

Speech-enabled control appears promising, because It would allow users to interact with their home entertainment and information system by spoken commands. Entering spoken commands into the TV set is just the beginning. To provide a natural and intuitive user interface, the system should allow users to speak in natural language, just as they would speak to another person. Moreover, while spoken interaction with the television set may be good for some types of interaction, there are other situations where a different modality could be more useful.

For example, when the user is interacting with the television so that he or she is able to see on-screen pprompts and is able to see the program material being broadcast, spoken interaction can be readily mixed with conventional pushbutton interaction. However, this interface falls apart when the user is attempting to interact with the television set over the telephone or remotely over the Internet, where the user does not see the television screen.

The present invention provides a system that will allow the user to interact with the television and with other associated multimedia equipment, including VCRs and other media recorders, through a unified access, speech-enabled system.

The system provides speaker verification/identification, so that the identity of the speaker can be determined by simply "recognizing" the speaker's voice. Based on the speaker's identity, the system loads the appropriate set of user profile parameters that will guide interaction between that user and the system.

The system automatically determines what modality the user has currently invoked (direct voice contact, telephone voice contact. Internet commands) and employs a natural language grammar that is appropriate for the current modality. In this way, the system automatically selects the most natural form of dialog with which to learn and carry out the user's instrucitons.

For example, when the modality is by direct voice contact with the television (e.g., in the television viewing room) on-screen displays may be provided to assist the user in making program selections. Conversely, if the telephone modality has been selected, on-screen prompts are dispensed with, and the system instead synthesizes speech responses that are sent to the user through the telephone connection. Furthermore, when the Internet modality has ben selected, the system allows the user to interact more directly with the data stored in slots by the natural language parser. In this way, the user can view the current state of the system and enter changes by keyboard entry.

For a more complete understanding of the invention, it objects and advantages, refer to the following specification and to the accompanying drawings.

### Brief Description of the Drawings

Figure **1** is a block diagram of the preferred embodiment of the system in accordance with the invention;
Figure **2** is a diagram of a user profile database in accordance with the invention;
Figure **3** is a block diagram depicting the components of the natural language parser of the presently preferred embodiment of the invention;
Figure **4** is a block diagram depicting the components of the local parser of the presently preferred embodiment of the invention;
Figure **5** is a data flow diagram illustrating how to construct an eigenspace from a plurality of training speakers;
Figure **6** is a data flow diagram illustrating how an adapted model is constructed using eigenvoices in the presently preferred embodiment of the invention;
Figure **7** illustrates the verification/identification process of the preferred embodiment; and
Figure **8** is a block diagram of an alternative embodiment of the system in accordance with the invention.

### Detailed Description of the Preferred Embodiments

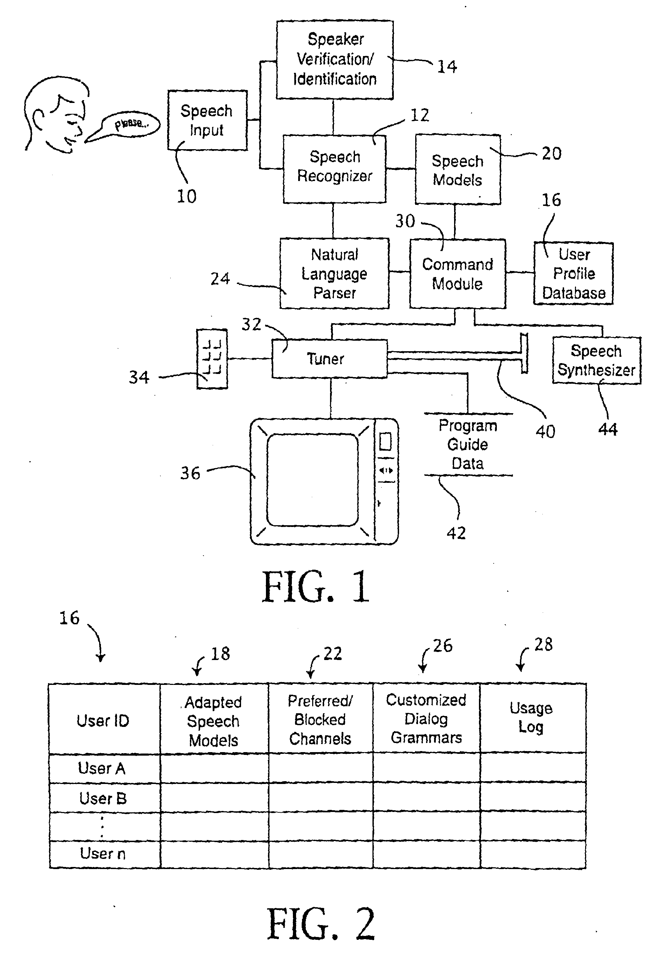

A preferred embodiment of the invention is illustrated in Figure **1**. The user interacts with the system by speaking, using natural language to express what the user wishes to view or how the user wishes to control the system. Speech may be input through a variety of different mechanisms, including wireless handheld microphone or hardwired microphone. The microphone can be packaged within the handheld remote control unit, if desired.

The speech input signal is processed by the speech input module 10. This module amplifies and suitably filters the signal, so that the speech recognizer can do a better job of processing the spoken content. More specifically, speech input module **10** digitizes the input speech so that features may be extracted from the speech for further processing by the speech recognizer **12**.

Associated with speech recognizer **12** is a speaker verification/identification module **14**. The speaker verification/identification module **14** will be discussed more fully below. Its function is to identity the identity of the speaker so that a user profile appropriate for that speaker can be loaded into the system.

In this regard, the system includes a user profile database **16** that stores user preferences and other information. A diagrammatic representation of a presently preferred user profile database is shown in Figure **2**.

Referring to Figure **2** the preferred user profile database includes records for each user, that contain information about the user's speech patterns and viewing preferences. More specifically, the database stores adapted speech models as at **18**. These are loaded into the speech model memory space **20** (Fig. 1) so that they are used by speech recognizer **12** to decode the speech for that user. The adapted speech models may be trained as the system is used by each user. A presently preferred technique for constructing the adapted speech models will be discussed more fully below,

The user profile database **16** also stores a record of which channels the user prefers to view; and alternatively, which channels are blocked so that the user will not view them. This latter feature is quite useful for parents who wish to block certain channels from their children. The system records this information as at **22** in the database, and it is thereafter used to control which channels are available to the particular user whose speech has been identified by the speaker verification module **14**.

The system includes a natural language parser **24** (Fig. **1**) that uses a set of pre-defined grammars to ascertain the semantics or meaning expressed by the user. The user profile database **16** includes storage of a set of customized dialog grammars as at **26**. These customized grammars are used by the natural language parser along with a set of pre-defined grammars that are global to all users. Details of the presently preferred parser and its use of pre-defined and customized dialog grammars will be discussed more fully below.

Finally, the presently preferred user profile database includes a usage log as at **28** for each user. The usage log maintains a record of what programs the user has viewed in the past. The usage log can be used by the natural language parser, to more rapidly ascertain the meaning of a user's spoken command. For example, programs the user has viewed in the past may be given preference by the natural language parser when it is trying to determine what program the user is requesting. The usage log can also be used to limit the number of hours certain viewers are allowed to watch the television in any given day, a feature many parents will find helpful.

A primary function of the natural language parser and speech recognizer is to extract the semantics or meaning behind a user's natural language spoken input. The speaker verification module **14** greatly improves the ability of the natural language parser and recognizer to perform this task, by loading user profile data designed to fine-tune the semantic representation of the user's spoken input.

The natural language parser **24** supplies a semantic representation of the user's input to the command module **30**. This module, in turn, commands the tuner **32** in making channel selections and in setting various tuner functions. In the latter respect, tuner **32** has an associated manual keypad entry system **34** (which may also include in infrared remote control unit, not shown). Commands from command module **30** may, for example, place certain channels in a blocked state, so that a child cannot circumvent parental control by entry of a forbidden channel through direct keypad entry.

Tuner **32** selects the active channel that will be displayed on the television screen or monitor **36**. If the user speaks something like, "Please switch to Channel 7," the command module will instruct tuner **32** to make the requested channel selection directly. However, if the user enters a more complex command such as, "I want to watch a movie starring Marilyn Monroe," the natural language parser must first ascertain what programs are available that meet the request, before a channel selection is made. In this case, the command module **30** sends a command to tuner **32** to access an electronic program guide. The electronic program guide may be available on-line via the cable or satellite connection (a cable connection is illustrated in Figure **1** at **40**). If desired, the electronic program guide data can be stored in advance in a suitable program guide data store **42** that may be associated with the tuner **32**, or optionally with command module **30**.

The command module accesses this program guide data, or a live, on-line transmission of the data, to determine whether there is a program that meets the user's request. If the program guide includes a program that meets the user's request (in this case a movie starring Marilyn Monroe) the command module will notify the user by synthesized voiced response and/or by display of suitable text prompt on the television screen **36**. If more than one selection is found, they may all be displayed or reported by spoken response.

If the requested material is not currently available, the user will be advised of this fact, and may be presented the option to record it for later viewing.

The natural language parser **24** of the preferred embodiment is designed to quickly extract the speaker's meaning from a diverse range of different spoken phrases or sentences. In other words, the user does not need to express a given request in only one way. Rather, the user simply speaks naturally, and the system extracts the user's meaning from the words spoken.

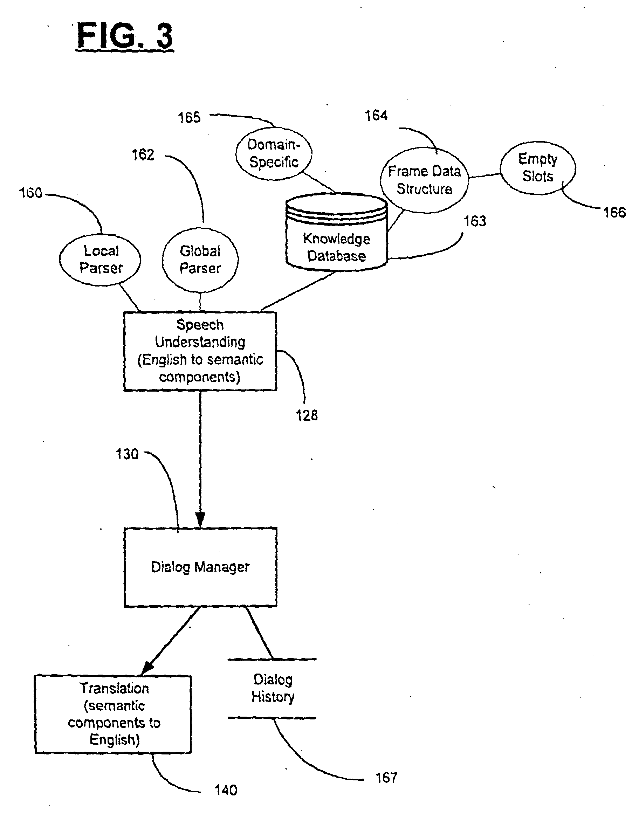

Figure **3** depicts components of the natural language parser **24** in more detail. In particular, speech understanding module **128** includes a local parser **160** to identify predetermined relevant task-related fragments. Speech understanding module **128** also includes a global parser **162** to extract the overall semantics of the speaker's request.

The local parser **160** utilizes in the preferred embodiment small and multiple grammars along with several passes and a unique scoring mechanism to provide parse hypotheses. For example, the novel local parser **102** recognizes according to this approach phrases such as dates, names of people, and movie categories. If a speaker utters "record me a comedy in which Mel Brooks stars and is shown before January 23rd", the local parser recognizes: "comedy" as being a movie category; "January 23rd" as a date; and "Mel Brooks" as an actor. The global parser assembles those items (movie category, date, etc.) together and recognizes that the speaker wishes to record a movie with certain constraints.

Speech understanding module **128** includes knowledge database **163** which encodes the semantics of a domain (i.e., goal to be achieved). In this sense, knowledge database **163** is preferably a domain-specific database as depicted by reference numeral **165** and is used by dialog manager 130 to determine whether a particular action related to achieving a predetermined goal is possible.

The preferred embodiment encodes the semantics via a frame data structure **164**. The frame data structure **164** contains empty slots **166** which are filled when the semantic interpretation of global parser **162** matches the frame. For example, a frame data structure (whose domain is tuner commands) includes an empty slot for specifying the viewer-requested channel for a time period. If viewer **120** has provided the channel, then that empty slot is filled with that information. However, if that particular frame needs to be filled after the viewer has initially provided its request, then dialog manager **130** instructs computer response module **134** to ask viewer **120** to provide a desired channel.

The frame data structure **164** preferably includes multiple frames which each in turn have multiple slots. One frame may have slots directed to attributes of a movie, director, and type of movie. Another frame may have slots directed to attributes associated with the time in which the movie is playing, the channel, and so forth.

The following reference discusses global parsers and frames: R. Kuhn and R. D. Mori, *Spoken Dialogues with Computers (Chapter 14: Sentence Interpretation),* Academic Press, Boston (1998).

Dialog manager **130** uses dialog history data file **167** to assist in filling in empty slots before asking the speaker for the information. Dialog history data file **167** contains a log of the conversation which has occurred through the device of the present invention. For example, if a speaker utters "I'd like to watch another Marilyn Monroe movie," the dialog manager **130** examines the dialog history data file **167** to check what movies the user has already viewed or rejected in a previous dialog exchange. If the speaker had previously rejected "Some Like It Hot," then the dialog manager **130** fills the empty slot of the movie title with movies of a different title. If a sufficient number of slots have been filled, then the present invention will ask the speaker to verify and confirm the program selection. Thus, if any assumptions made by the dialog manager **130** through the use of dialog history data file **167** prove to be incorrect, then the speaker can correct the assumption.

The natural language parser **24** analyzes and extracts semantically important and meaningful topics from a loosely structured, natural language text which may have been generated as the output of an automatic speech recognition system (ASR) used by a dialogue or speech understanding system. The natural language parser **24** translates the natural language text input to a new representation by generating well-structured tags containing topic information and data, and associating each tag with the segments of the input text containing the tagged information. In addition, tags may be generated in other forms such as a separate list, or as a semantic frame.

Robustness is a feature of the natural language parser **24** as the input can contain grammatically incorrect English sentences, due to the following reasons: the input to the recognizer is casual, dialog style, natural speech can contain broken sentences, partial phrases, and the insertion, omission, or mis-recognition of errors by the speech recognizer even when the speech input is considered correct. The natural language parser **24** deals robustly with all types of input and extracts as much information as possible.

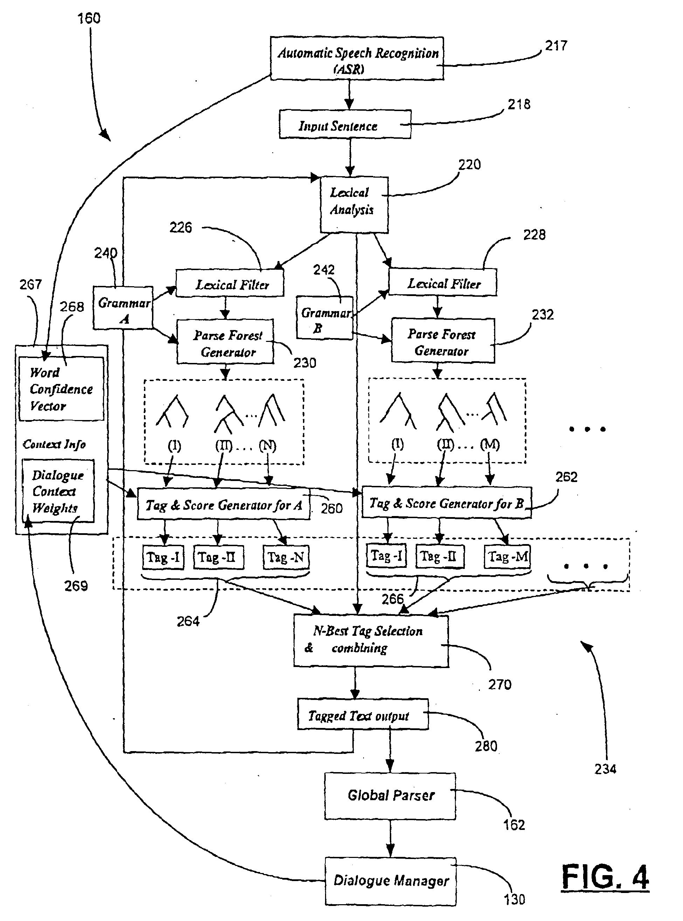

Figure **4** depicts the different components of the local parser **160** of the natural language parser **24**. The natural language parser **24** preferably utilizes generalized parsing techniques in a multi-pass approach as a fixed-point computation. Each topic is described as a context-sensitive LR (left-right and rightmost derivation) grammar, allowing ambiguities. The following are references related to context-sensitive LR grammars: A. Aho and J. D. Ullman, *Principles of Compiler Design,* Addison Wesley Publishing Co., Reading, Massachusetts (1977); and N. Tomita, *Generalized LR Parsing,* Kluwer Academic Publishers, Boston, Massachusetts (1991).

At each pass of the computation, a generalized parsing algorithm is used to generate preferably all possible (both complete and partial) parse trees independently for each targeted topic. Each pass potentially generates several alternative parse-trees, each parse-tree representing a possibly different interpretation of a particular topic. The multiple passes through preferably parallel and independent paths result in a substantial elimination of ambiguities and overlap among different topics. The generalized parsing algorithm is a systematic way of scoring all possible parse-trees so that the (N) best candidates are selected utilizing the contextual information present in the system.

Local parsing system **160** is carried out in three stages: lexical analysis **220**; parallel parse-forest generation for each topic (for example, generators **230** and **232**); and analysis and synthesis of parsed components as shown generally by reference numeral **234**.

### Lexical analysis:

A speaker utters a phrase that is recognized by an automatic speech recognizer **217** which generates input sentence **218**. Lexical analysis stage **220** identifies and generates tags for the topics (which do not require extensive grammars) in input sentence **218** using lexical filters **226** and **228**. These include, for example, movie names; category of movie; producers; names of actors and actresses; and the like. A regular-expression scan of the input sentence **218** using the keywords involved in the mentioned exemplary tags is typically sufficient at this level. Also, performed at this stage is the tagging of words in the input sentence that are not part of the lexicon of particular grammar. These words are indicated using an X-tag so that such noise words are replaced with the letter "X".

### Parallel parse-forest generation:

The natural language parser **24** uses a high-level general parsing strategy to describe and parse each topic separately, and generates tags and maps them to the input stream. Due to the nature of unstructured input text **218**, each individual topic parser preferably accepts as large a language as possible, ignoring all but important words, dealing with insertion and deletion errors. The parsing of each topic involves designing context-sensitive grammar rules using a meta-level specification language, much like the ones used in LR parsing. Examples of grammars include grammar A **240** and grammar B **242**. Using the present invention's approach, topic grammars **240** and **242** are described as if they were an LR-type grammar, containing redundancies and without eliminating shift and reduce conflicts. The result of parsing an input sentence is all possible parses based on the grammar specifications.

Generators **230** and **232** generate parse forests **250** and **252** for their topics. Tag-generation is done by synthesizing actual information found in the parse tree obtained during parsing. Tag generation is accomplished via tag and score generators **260** and **262** which respectively generate tags **264** and **266**. Each identified tag also carries information about what set of input words in the input sentence are covered by the tag. Subsequently the tag replaces its cover-set. In the preferred embodiment, context information **267** is utilized for tag and score generations, such as by generators **260** and **262**. Context information **267** is utilized in the scoring heuristics for adjusting weights associated with a heuristic scoring factor technique that is discussed below. Context information **267** preferably includes word confidence vector **268** and dialogue context weights **269**. However, it should be understood that the parser **24** is not limited to using both word confidence vector **268** and dialogue context weights **269**, but also includes using one to the exclusion of the other, as well as not utilizing context information **267**.

Automatic speech recognition process block **217** generates word confidence vector **268** which indicates how well the words in input sentence **218** were recognized. Dialog manager **130** generates dialogue context weights **269** by determining the state of the dialogue. For example, dialog manager **130** asks a user about a particular topic, such as, what viewing time is preferable. Due to this request, dialog manager **130** determines that the state of the dialogue is time-oriented. Dialog manager **130** provides dialogue context weights **269** in order to inform the proper processes to more heavily weight the detected time-oriented words.

### Synthesis of Tag-components:

The topic spotting parser of the previous stage generates a significant amount of information that needs to be analyzed and combined together to form the final output of the local parser. The parser **24** is preferably as "aggressive" as possible in spotting each topic resulting in the generation of multiple tag candidates. Additionally in the presence of numbers or certain key-words, such as "between", "before", "and", "or", "around", etc., and especially if these words have been introduced or dropped due to recognition errors it is possible to construct many alternative tag candidates. For example, an input sentence could have insertion or deletion errors. The combining phase determines which tags form a more meaningful interpretation of the input. The parser **24** defines heuristics and makes a selection based on them using a N-Best candidate selection process. Each generated tag corresponds to a set of words in the input word string, called the tag's cover-set.

A heuristic is used that takes into account the cover-sets of the tags used to generate a score. The score roughly depends on the size of the cover-set, the sizes in the number of the words of the gaps within the covered items, and the weights assigned to the presence of certain keywords. In the preferred embodiment, ASR-derived confidence vector and dialog context information are utilized to assign priorities to the tags. For example applying channel-tags parsing first potentially removes channel-related numbers that are easier to identify uniquely from the input stream, and leaves fewer numbers to create ambiguities with other tags. Preferably, dialog context information is used to adjust the priorities.

### N-Best Candidates Selection

At the end of each pass, an N-best processor **270** selects the N-best candidates based upon the scores associated with the tags and generates the topic-tags, each representing the information found in the corresponding parse-tree. Once topics have been discovered this way, the corresponding words in the input can be substituted with the tag information. This substitution transformation eliminates the corresponding words from the current input text. The output **280** of each pass is fed-back to the next pass as the new input, since the substitutions may help in the elimination of certain ambiguities among competing grammars or help generate better parse-trees by filtering out overlapping symbols.

Computation ceases when no additional tags are generated in the last pass. The output of the final pass becomes the output of the local parser to global parser **162**. Since each phase can only reduce the number of words in its input and the length of the input text is finite, the number of passes in the fixed-point computation is linearly bounded by the size of its input.

The following scoring factors are used to rank the alternative parse trees based on the following attributes of a parse-tree:
- Number of terminal symbols.
- Number of non-terminal symbols.
- The depth of the parse-tree.
- The size of the gaps in the terminal symbols.
- ASR-Confidence measures associated with each terminal symbol.
- Context-adjustable weights associated with each terminal and non-terminal symbol.

Each path preferably corresponds to a separate topic that can be developed independently, operating on a small amount of data, in a computationally inexpensive way. The architecture of the parser **24** is flexible and modular so incorporating additional paths and grammars, for new topics, or changing heuristics for particular topics is straight forward, this also allows developing reusable components that can be shared among different systems easily.

### Speaker Identification/Verification

Referring to Figure **1**, the speaker identification/verification module **14** is preferably invoked when the user speaks a pre-determined wakeup command to the system. The wakeup command may be a pre-determined word used by all members of a family, such as the keyword "please" or other suitably polite keyword. Alternatively, the user can train his or her own unique keyword that may thereafter be used instead of the generic keyword for accessing the system.

The speaker identification/verification module can thus be configured to discriminate among users by simply recognizing different keywords for each user. However, the presently preferred embodiment employs a more robust system that identifies speaker characteristics unique to each speaker. In this way, different speakers can be discriminated among even if they use the same keyword.

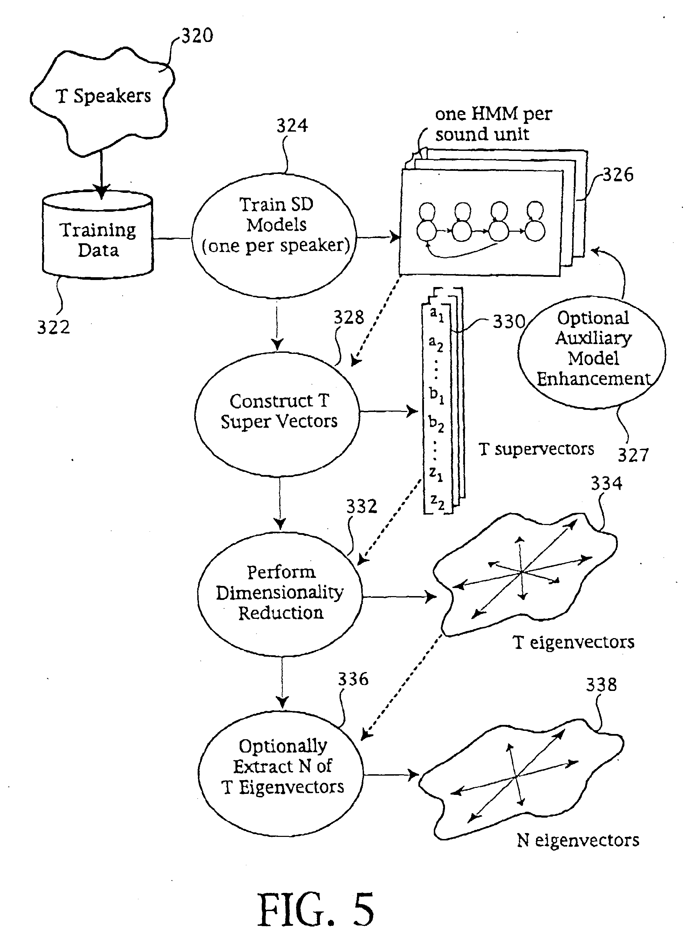

The preferred speaker identification/verification module **14** uses speaker verification techniques based on a concept we call eigenvoices. The process for constructing an eigenspace to represent a plurality of training speakers is illustrated in Figure **5**. The illustration assumes a number T of training speakers **320** provide a corpus of training data **322** upon which the eigenspace will be constructed. Preferably, a reasonably large number of speakers (on the order of 100 to 200) provide the training data. These training data are then used to train a speaker dependent (SD) model as illustrated at **324**. One model per speaker is constructed at step **324**, with each model representing the entire inventory of sound units that is to be understood by the recognition system. Alternatively, the model can represent the keyword itself that will be used as the wakeup command. Each model can be a set of Hidden Markov Models (HMM) or other parameter-based speech modeling system. In the present embodiment, one HMM for each sound unit is employed. This is illustrated in Figure **5** at **326**.

Superior results are achieved where the training set represents accurate speaker-dependent models. Therefore, if desired, the speaker-dependent models may be enhanced using auxiliary adaptation techniques. Such techniques include Maximum A Posteriori estimation (MAP) and other transformation-based approaches, such as Maximum Likelihood Linear Regression (MLLR). This optional auxiliary adaptation processing is illustrated in Figure **5** at **327** Enhancing the speaker-dependent models in this way is particularly advantageous when constructing large vocabulary applications, where the amount of training data per parameter for a given speaker may be low.

After all training data from T speakers have been used to train the respective speaker dependent models, a set of T supervectors is constructed at **328**. Thus there will be one supervector **330** for each of the T speakers. The supervector for each speaker comprises an ordered list of parameters (typically floating point numbers) corresponding to at least a portion of the parameters **318** of the Hidden Markov Models for that speaker. Parameters corresponding to the sound units are included In the supervector for a given speaker. The parameters may be organized in any convenient order. The order is not critical; however, once an order is adopted it must be followed for all T speakers.

The ordered Hidden Markov Model parameters are then concatenated to form the supervector. The choice of which HMM parameters to include in the supervector may depend on the available processing power. We have found that constructing supervectors from the Gaussian means gives good results. If greater processing power is available, the supervectors may also include other HMM parameters, such as the transition probabilities or the Covariance matrix parameters . Naturally, if the Hidden Markov Models generate discrete outputs (as opposed to probability densities) then these output values may be used to comprise the supervector.

After supervectors have been constructed for each of the training speakers, dimensionality reduction is performed at step **332**. Dimensionality reduction is effected by mapping of high-dimensional space onto low-dimensional space. A variety of different techniques may be used to effect dimensionality reduction. These include Principal Component Analysis (PCA), Linear Discriminant Analysis (LDA), Factor Analysis (FA), Independent Component Analysis (ICA), Singular Value Decomposition (SVD) and other transformations that apply reduction criteria based on variance.

The invention may be implemented with any such method (not only those listed) for finding such a constant linear transformation M in the special case where the input vectors are training supervectors derived from speaker-dependent modeling, and where M is used to carry out the aforementioned technique.

Dimensionality reduction upon T supervectors yields T eigenvectors, as at **334**. Thus, if **320** training speakers have been used the system will generate **320** eigenvectors. These eigenvectors define what we call eigenvoice space or eigenspace.

The eigenvectors that make up the eigenvoice space contain different information; they each represent a different dimension across which different speakers may be differentiated. Each supervector in the original training set can be represented as a linear combination of these eigenvectors. The eigenvectors are ordered by their importance in modeling the data: the first eigenvector is more important than the second, which is more important than the third, and so on. Our experiments with this technique thus far show that the first eigenvector appears to correspond to a male-female dimension.

Although a maximum of T eigenvectors is produced at step **332**, in practice, it is possible to discard several of these eigenvectors, keeping only the first N eigenvectors. Thus at step **336** we optionally extract N of the T eigenvectors to comprise a reduced parameter eigenspace at **338**. The higher order eigenvectors can be discarded because they typically contain less important information with which to discriminate among speakers. Reducing the eigenvoice space to fewer than the total number of training speakers provides an inherent data compression that can be helpful when constructing practical systems with limited memory and processor resources.

After generating the eigenvectors from the training data each speaker in the training data is represented in eigenspace. The speakers may be represented in eigenspace either as points in eigenspace or as probability distributions in eigenspace.

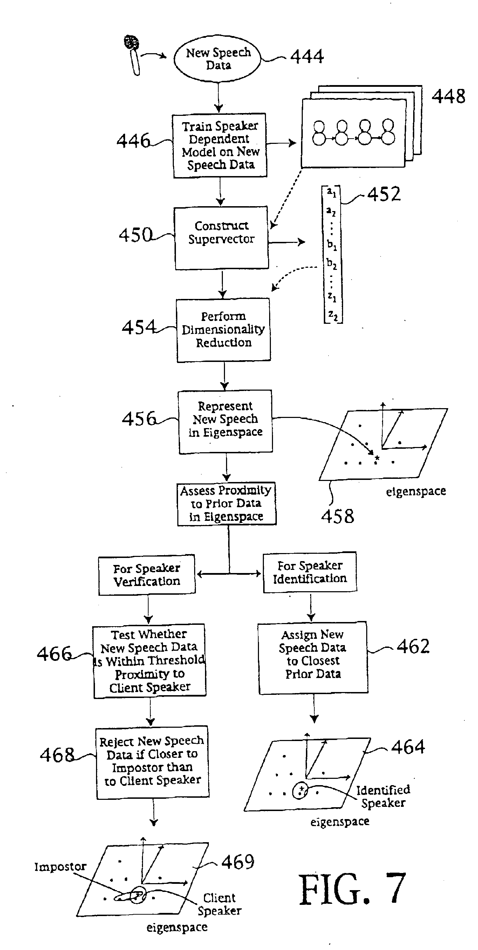

Referring to Figure **7**, the user seeking speaker identification or verification supplies new speech data at **444** and these data are used to train a speaker dependent model as indicated at step **446**. The model **448** is then used at step **450** to construct a supervector **452**. Note that the new speech data may not necessarily include an example of each sound unit. For instance, the new speech utterance may be too short to contain examples of all sound units.

Dimensionality reduction is performed at step **454** upon the supervector **452**, resulting in a new data point that can be represented in eigenspace as indicated at step **456** and illustrated at **458**. In the illustration at **458** the previously acquired points in eigenspace (based on training speakers) are represented as dots, whereas the new speech data point is represented by a star.

Having placed the new data point in eigenspace, it may now be assessed with respect to its proximity to the other prior data points or data distributions corresponding to the training speakers. Figure **7** illustrates an exemplary embodiment of both speaker identification and speaker verification.

For speaker identification, the new speech data is assigned to the closest training speaker in eigenspace, step **462** diagrammatically illustrated at **464**. The system will thus identify the new speech as being that of the prior training speaker whose data point or data distribution lies closest to the new speech in eigenspace.

For speaker verification, the system tests the new data point at step **466** to determine whether it is within a predetermined threshold proximity to the client speaker in eigenspace. As a safeguard the system may, at step **468**, reject the new speaker data if it lies closer in eigenspace to an impostor than to the client speaker. This is diagrammatically illustrated at **469**, where the proximity to the client speaker and proximity to the closest impostor have been depicted.

### Speaker Adaptation

The eigenvoices technology that is used by the speaker verification module **14** also provides a very fast way for adapting the speech models used by recognizer **18** to each individual user. Speaker adaptation has traditionally been a difficult problem for speech recognition systems. Often, large examples of training speech are needed before a sufficiently robust set of adapted models can be built. The eigenvoice technique greatly enhances the speaker adaptation process, because it allows adaptation to be performed even when only a brief example of adaptation speech is provided. In other words, the adaptation system of the preferred embodiment can begin to adapt the generic speaker models to a specific user as soon as the wakeup command or keyword is spoken.

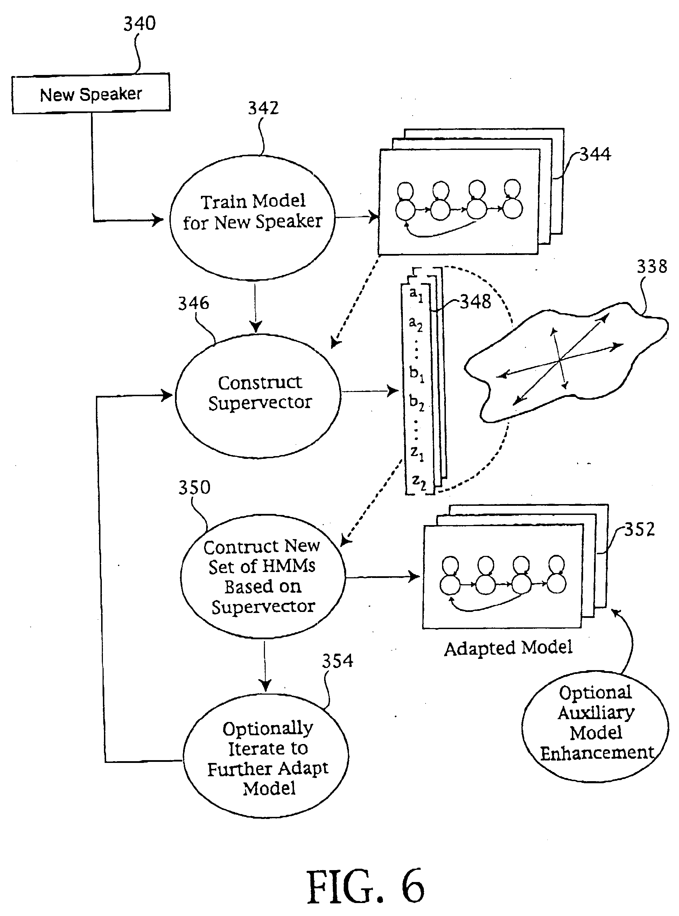

Once the eigenvoice space has been constructed, speaker normalization, speaker adaptation or environment adaptation can be readily accomplished. While constructing the eigenspace is somewhat computationally intensive, and is typically conducted offline, adaptation is a comparatively simple computational operation that can be performed while the new speaker is using the system. Referring to Figure **6**, speech from new speaker **340** is used at step **342** to train a speaker dependent model to construct a set of HMMs **344** (one for each sound unit). The speaker dependent model can be trained in either a supervised mode, where the training system knows the content of the training speech in advance, or in an unsupervised mode, where the speech recognition system uses a speaker independent model to determine the content of the adaptation speech.

The speaker dependent model trained on this new speaker will usually be very inadequate for recognition, at least at first. However, the model may nevertheless be used to construct a supervector. The supervector is constructed at step **346** such that the supervector (supervector **348**) is constrained to fall within the eigenvoice space **338** previously created from the training speakers. Supervector **348** is constructed with the imposed constraint that the HMM model used for recognition must be a linear combination of the eigenvoices comprising eigenvoice space **338**.

The speaker dependent model **344** serves to estimate the linear combination of coefficients that will comprise the adapted model for that new speaker. Thus in step **350** a new set of HMMs is constructed based on supervector **348** to generate the adapted model **352**. If desired, an optional iterative process may be performed at **354** to construct a new supervector from the adapted model **352** and thereafter to construct another set of HMMs from which a further adapted model may be constructed. The command module **30** is designed to receive output from the natural language parser and to provide commands to the television tuner **32** (and also to other optionally attached equipment such as recorders). Command module **30** also includes a speech synthesizer **44**, which may be a concatenative speech synthesizer, for example, that injects speech prompts and information messages through command module **30** into tuner **32** where they may be played back through the audio system of the television or home entertainment system.

Essentially, command module **30** serves as the interface between the natural language parsing system of the preferred embodiment and the tuner of the television. If desired, the speech and command module components can be incorporated into the television set, itself, along with tuner **32**. Alternatively, these components can be packaged as part of a set top box or other auxiliary equipment designed to connect to the television set and multimedia system.

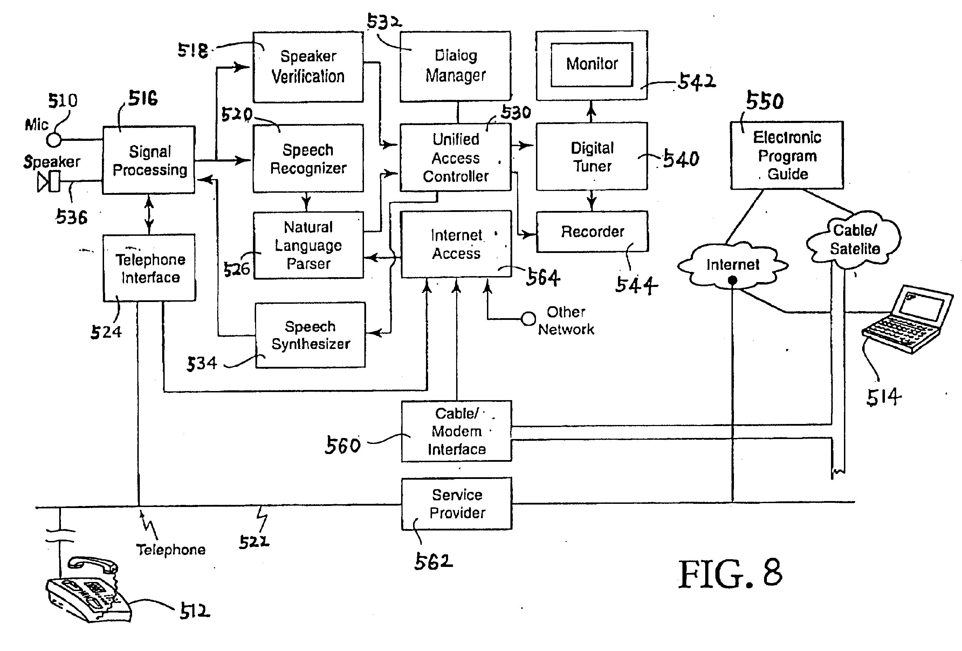

Turning now to Figure 8, a modification of the invention is provided to allow the users to interact with the television and with other associated multimedia equipment, including VCRs and other media recorders, through a unified access, speech-enabled system.

The unified access system includes multiple input points by which the user can interact with the system via the supplied microphone input port **510**, via any telephone, such as telephone **512** and even via the Internet using a suitable computer such as laptop computer **514**. Input from the microphone is supplied to a signal processing module **516** . This module optionally filters and digitizes the user's input speech so that it may be supplied to the speaker verification/identification module **518** and speech recognizer module **520**.

User input through a telephone **512** is supplied through the existing telephone infrastructure **522** to a telephone interface **524** within the system. The telephone interface answers the user's incoming call and passes the user's voiced instructions to the signal processing module **516.**

The system is designed to hold a natural language dialog with users. The dialog can be modified to suit each individual user. Speaker verification/identification module **518** determines the identity of the user by examining the characteristics of the user's voice. The presently preferred speaker verification/identification module uses an eigenvoice speaker verificationlidentification system that will be described more fully below.

The user's spoken instructions are converted into text by speech recognizer **520**, and the output of speech recognizer **520** is supplied to a natural language parser **526**. The natural language parser is preferably a goal-oriented parser that has a pre-defined database of goal-oriented grammars stored within it. Speech is converted by recognizer **520** into words, phrases and sentences which are in turn analyzed by the parser to extract the user's meaning from the sentences. More details of the presently preferred parser will be described more fully below.

The parser supplies its output to a unified access controller module **530**. The controller module has an associated dialog manager **532**. The unified access controller is also coupled to the speaker verification module **518**, so that the unified access controller is made known of the identity of the speaker.

Using its dialog manager **532**, the unified access controller prompts the user for additional information, if required, by sending text queries to the speech synthesizer module **534**. Synthesizer module **534** converts these text queries into synthesized speech, which is then supplied to the signal processing module **516** for replay through speaker **536** or via the telephone interface **524** through the user's telephone handset (e.g., telephone **512**.

If the user's instruction is sufficiently refined to constitute a command, the unified access controller sends a control command to the digital tuner **540**. Tuner **540** selects the appropriate television channel so that the user's requested program will be displayed on television monitor **542**. The unified access controller is also optionally coupled to a recording device, such as recorder **544**. The user may thus send commands to cause a recording to be made of a selected broadcast.

The natural language parser and dialog manager allow a complex interaction between the user and his or her audio video equipment. The parser will understand complex sentences such as "Are there any movies on tonight produced by Woody Allen?" The unified access controller would respond to such a question by obtaining a current copy of the electronic program guide **550** via Internet or through the cable or satellite infrastructure. If the requested program is found, the dialog manager formulates a response, advising the user that the program is, or is not, available for viewing on the requested day. The unified access controller then sends a text message to the speech synthesizer **534**, which, in turn, synthesizes a spoken reply.

If, after having heard the reply, the user wishes to view or record the program, the user simply speaks into the system and the speech recognizer, natural language parser and unified access controller carry out the user's wishes.

While speech input is often easiest for most users, the unified access control system also allows the user to interact with the system by suitable Internet connection. The system can be connected to the Internet through a variety of ways, including a cable modem interface **560**, and a telephone connection interface via a suitable service provider **562**. The system includes an Internet access module **564** that has suitable TCP/IP protocols built-in for effecting Internet access. The cable modem **560** may be coupled to the Internet access module **564**, as illustrated. If Internet access is provided through a service provider **562**, the Internet access module **564** may be coupled to the telephone interface **524**, as illustrated.

The typical electronic program guide **550** represents a complex hierarchical structure that breaks down different types of program content according to type. Thus a program guide **550** may divide programs into different categories, such as movies, sports, news, weather, and the like. These categories may further be subdivided. Thus movies may be subdivided into categories such as comedies, drama, science fiction and so forth. A semantic representation of the electronic program guide contents is stored based on the same goal-oriented grammar structure used by the natural language parser. This allows the parser **542** to readily find information about what is available for viewing. If the user has asked for comedy movies, the comedy movie portion of the semantic representation is accessed by the parser **542**, and the available programs falling under this category may then be displayed to the user.

The operating principle of the natural language parser **526** and the speaker verification/identification module **518** is the same as described above in association with Figure 1.

From the foregoing it will be seen that the present invention can greatly enhance the ease of use and versatility of interactive television and multimedia systems. The invention quickly adapts to the speech of each individual user, causing those pre-stored user profile data to guide the natural language speech-enabled interaction.

While the invention has been described in its presently preferred embodiment, it will be understood that the invention is capable of modification without departing from the spirit of the invention as set forth in the appended claims.

## Claims

1. A control system for audio/video equipment comprising:
a speaker verification/identification module for ascertaining the identity of a system user based on the user's speech;
a user profile database that stores user-specific data based on the identity of a system user and retrieves said data in response to operation of said speaker verification/identification module;
a speech recognizer and language parser system for extracting a semantic representation of spoken information provided by the user;
a command module coupled to said speech recognizer and language parser system for providing control signals to said audio/video equipment based on said extracted semantic representation,
wherein at least one of said speech recognizer and language parser system and said command module uses said user-specific data in performing its respective function.

2. The control system of claim **1** wherein said speaker verification/identification module associates a user-defined utterance with each system user and detects the occurrence of said utterance in ascertaining the identity of a system user.

3. The control system of claim **1** wherein said speaker verification/identification module associates speaker speech parameters with each system user and detects the occurrence of said speech parameters in ascertaining the identity of a system user.

4. The control system of claim **1** wherein said speaker verification/identification module associates a reduced dimensionality vector with each system user and detects the occurrence of said reduced dimensionality vector in ascertaining the identity of a system user.

5. The control system of claim **4** wherein said reduced dimensionality vector is an Eigenvector.

6. The control system of claim **1** wherein said user profile database stores user-specific data representing adapted speech models that are supplied to said speech recognizer.

7. The control system of claim **1** wherein said user profile database stores user-specific data representing customized dialog grammars that are supplied to said language parser.

8. The control system of claim **1** wherein said user profile database stores user-specific data representing preferred program channels.

9. The control system of claim **1** wherein said user profile database stores user-specific data representing blocked program channels.

10. The control system of claim **1** wherein said user profile database stores user-specific data representing usage log data for a particular user.

11. The control system of claim **1** further comprising program guide data store for storing data extracted from an electronic program guide about available program content.

12. The control system of claim **11** wherein said parser accesses said program guide data store to assist in ascertaining said semantic representation.

13. A control system for audio/video equipment comprising:
a speaker verification/identification module for ascertaining the identity of a system user based on the user's speaking of a predefined utterance;
a user profile database that stores user-specific data based on the identity of a system user and retrieves said data in response to operation of said speaker verification/identification module;
a command module for providing control signals to said audio/video equipment based on interaction with said user,
wherein said command module uses said user-specific data in performing its respective function.

14. The control system of claim **13** wherein said predefined utterance is a predefined wakeup command.

15. The control system of claim **13** wherein said predefined utterance is a predefined word.

16. The control system of claim **13** wherein said predefined utterance is the word: please.

17. A unified access system for controlling audio/video components, comprising:
a unified access controller having port for communicating with at least one audio/video component and for supplying control commands to said component;
a speech recognition system coupled to said unified access controller;
said speech recognition system having a first input for user entry of spoken information by microphone and a second input for user entry of spoken information by telephone;
storage system for acquiring and storing an electronic program guide that identifies program content that is available for presentation through said audio/video component;
natural language parser coupled to said speech recognition system and to said storage system for extracting semantics from said user entry of spoken information and for correlating said extracted semantics with said electronic program guide.

18. The unified access system of claim 17 further comprising a third input for user entry of information through a computer network.

19. The unified access system of claim 18 wherein said third input includes Internet access module coupled to said natural language parser for conveying information entered through said computer network to said parser.

20. The unified access system of claim 17 wherein said storage system includes Internet access module coupled to a computer network for acquisition of said electronic program guide.

21. The unified access system of claim 17 wherein said unified access controller supplies control commands to a plurality of audio/video components.

22. The unified access system of claim 21 wherein said plurality of components includes a display monitor and a recorder.

23. The unified access system of claim 17 wherein said storage system includes cable interface for acquiring said electronic program guide over a channel that also provides audio/video content.

24. The unified access system of claim 17 further comprising speaker verification module coupled to at least one of said first and second inputs for ascertaining the identity of the user who is speaking.

25. The unified access system of claim 24 further comprising a data store containing user profile data that is accessed based on the identity of the user as determined by said speaker verification module.

26. The unified access system of claim 17 wherein said natural language parser is a goal-oriented parser that extracts semantics using a pre-stored set of frames having slots corresponding to predefined semantic content.

27. The unified access system of claim 26 wherein said recognition system supplies data to fill said slots based on keyword information extracted from said spoken information.

28. The unified access system of claim 17 further comprising a dialog manager coupled to at least one of said unified access controller and said parser, said dialog manager generating prompts to the user to elicit further spoken information from said user.

29. The unified access system of claim 17 further comprising speech synthesizer for supplying synthesized speech prompts to said user.
